# EUROPÄISCHE PATENTSCHRIFT

(11) **EP 1 039 173 B1**
(45) Veröffentlichungstag und Bekanntmachung des Hinweises auf die Patenterteilung: **03.12.2003**
(21) Anmeldenummer: 00103098.0
(22) Anmeldetag: 16.02.2000
(51) Int. Cl.: F16H 25/24, F16C 19/18, F16C 35/06, F16C 19/16, F16C 25/08, F16C 33/58

(54) **Lageranordnung für einen Gewindetrieb**
Bearing arrangement for a screw drive
Dispositif de palier pour cric à vis

(30) Priorität: 24.03.1999 DE 19913200
(43) Veröffentlichungstag der Anmeldung: 27.09.2000
(73) Patentinhaber: INA-Schaeffler KG, 91074 Herzogenaurach (DE)
(72) Erfinder: Schwinghammer, Reinhard, Dipl.-Ing., 90587 Tuchenbach (DE); Hilbinger, Jürgen, 91413 Neustadt-Aisch (DE)

(56) Entgegenhaltungen:
- US-A- 3 372 962
- US-A- 4 366 995
- US-A- 4 462 187

## Beschreibung

### Anwendungsgebiet der Erfindung

Die Erfindung betrifft eine Lageranordnung für einen Gewindetrieb, insbesondere für die Lagerung eines Wälzschraubtriebes in der Feinwerktechnik, bestehend aus zwei nebeneinander angeordneten Wälzlagern, die mit ihrer Mantelfläche von einem Halteelement aufgenommen sind, wobei das Halteelement über einen Flansch an einem Gehäuse befestigt ist und Mittel zur Erzeugung einer Lagervorspannung vorhanden sind.

### Hintergrund der Erfindung

Eine solche Lageranordnung ist aus der INA-Druckschrift ZAE "Lager für Gewindetriebe" vorbekannt. Auf Seite 1 dieses Dokumentes ist unter der Nummer 159 063 eine Lageranordnung gezeigt, die aus zwei in O-Anordnung zueinander angestellten Axial-Schrägkugellagern besteht. Diese sind von einem massiven Halteelement aufgenommen, das über einen umlaufenden Flansch mit durchgehenden Befestigungsbohrungen und mit Befestigungsschrauben an einem Gehäuse fixiert ist. Nach links ist die Lageranordnung durch einen radial nach innen weisenden Vorsprung des Halteelementes mittels Spaltdichtung geschützt. Rechtsseitig ist die Lageranordnung durch eine zweite Spaltdichtung geschützt, die durch Einschrauben eines Deckels in das Halteelement gebildet ist. Die Fixierung dieser Lageranordnung auf einer Welle erfolgt durch eine Präzisionsmutter, die mit einem Innengewinde versehen ist und rechtsseitig hinter den Axial-Schrägkugellagern auf den Wellenzapfen aufgeschraubt ist. Beim Anziehen der Präzisionsmutter werden die beiden Innenringe der Lager aufeinander zubewegt, bis die gewünschte Vorspannung eingestellt ist.

Nachteilig dabei ist zum einen, daß das kompliziert geformte Halteelement durch einen aufwendigen spanabhebenden Formgebungsprozeß herzustellen ist. Zum anderen ist die Abdichtung dieser Lageranordnung sehr aufwendig, da der rechtsseitige Lagerdeckel als zusätzliches Bauteil mit einem Außengewinde zu fertigen ist. Es ist auch von Nachteil, daß die axiale Fixierung der Lageranordnung auf der Welle mit Hilfe einer Präzisionsmutter erfolgt. Diese muß nämlich ebenfalls in aufwendiger Weise zusätzlich hergestellt werden und verlangt außerdem einen Gewindeabschnitt auf der Welle. Auch muß die Einstellung der gewünschten Vorspannung der Lageranordnung durch Anziehen der Präzisionsmutter durch den Kunden selbst erfolgen, was nicht immer unproblematisch ist. Es ist weiter von Nachteil, daß diese zusätzliche Präzisionsmutter den erforderlichen axialen Bauraum der Lageranordnung vergrößert.

### Zusammenfassung der Erfindung

Der Erfindung liegt daher die Aufgabe zugrunde, unter Vermeidung der bisherigen Nachteile eine gattungsgemäße Lageranordnung für einen Gewindetrieb zu entwickeln, die sich insbesondere sehr kostengünstig herstellen und einfacher handhaben läßt.

Erfindungsgemäß wird diese Aufgabe nach dem kennzeichnenden Teil von Anspruch 1 dadurch gelöst, daß die Wälzlager Rillenkugellager sind, die zur Einstellung der gewünschten Vorspannung einander zusortiert sind und daß das Halteelement eine erste spanlos geformte Hülse ist, die an einem Ende einen radial nach innen weisenden, die Stirnfläche des Rillenkugellagers überdeckenden Vorsprung und einen radial nach außen gerichteten Flansch aufweist.

Unter Zusortieren ist dabei bekanntermaßen ein spielfreies Abstimmen der Rillenkugellager durch vorheriges Ausmessen des axialen Versatzes zwischen Innen- und Außenring zu verstehen. Nach dem Vermessen werden anschließend die Rillenkugellager entweder nach der axialen Ausdehnung ihrer Lagerringe ausgesucht oder es wird, wie in Anspruch 2 beschrieben, zwischen den Innen- oder den Außenringen eine Paßscheibe angeordnet. Sind dann die passenden Rillenkugellager ausgewählt, so werden sie in einem weiteren Arbeitsgang mit dem Halteelement in Form einer spanlos geformten Hülse verbunden. Dies kann beispielsweise durch eine Preßpassung zwischen Außenmantel der Rillenkugellager und Hülse oder durch Einkleben der Lager im Halteelement erfolgen.

Auf diese Weise ist eine selbsthaltende Baueinheit mit nachstehend aufgeführten Vorteilen gebildet:
- Die Handhabung für den Lagerkunden ist wesentlich vereinfacht, da diese Lagerung bereits vorgespannt ist, d. h. die Einstellung der Lagervorspannung durch den Kunden selbst entfällt.
- Die Fertigung der Lageranordnung ist wesentlich verbilligt und vereinfacht, weil durch einen spanlosen Formgebungsvorgang wie beispielsweise Tiefziehen Hülsen in beliebiger Abmessung mit geringem Aufwand herstellbar sind.
- Zur Fixierung der Lageranordnung im Gehäuse sind keine zusätzlichen Bauteile erforderlich, lediglich eine plan bearbeitete Anschlußfläche mit Anschraubgewinde.
- Die als Wälzlager verwendeten Rillenkugellager sind wesentlich preiswerter als die nach dem bisherigen Stand der Technik verwendeten Axial-Schrägkugellager.

Nach einem weiteren Merkmal der Erfindung gemäß Anspruch 3 soll die Paßscheibe mit einer in axialer Richtung abgewinkelten Sicke versehen sein. Auf diese Weise wird verhindert, daß die Paßscheibe zwischen den Lagerringen schwerkraftbedingt beim Transport nach innen rutschen und so die Wellenbohrung zusetzen kann.

Nach einem weiteren zusätzlichen Merkmal gemäß Anspruch 4 ist vorgesehen, daß die Rillenkugellager in X- oder in O-Anordnung zueinander angestellt sind. Dabei werden Axialkräfte in beiden Richtungen, jeweils von einem Lager, aufgenommen. In bekannter Weise ist bei der O-Anordnung wegen der großen Stützbreite diese Lagerung sehr starr und nimmt große Kippmomente auf. Die kleine Stützbreite bei der X-Anordnung stellt bei Lagerung mit mehren Lagerstellen keine allzu großen Anforderungen an die Genauigkeit der Fluchtung. Kippmomente werden allerdings wegen der geringeren Starrheit der Anordnung weniger gut aufgenommen.

In Weiterbildung der Erfindung ist nach Anspruch 5 vorgesehen, daß die Rillenkugellager zumindest an ihren voneinander abgewandten Stirnseiten eine Dichtung aufweisen. Diese Dichtung kann entweder als Spalt- oder auch als schleifende Dichtung realisiert werden. Auf diese Weise ist sichergestellt, daß eine gebrauchsdauerbefettete Baueinheit geschaffen ist, die nicht nachgeschmiert zu werden braucht, da sie nach beiden Seiten abgedichtet ist.

Aus den Ansprüchen 6 und 7 geht hervor, daß der Halteflansch einstückig mit der Hülse verbunden ist und sich an einem Ende der Hülse befindet oder daß der Halteflansch als separates Bauteil gefertigt und mit der Hülse unlösbar, beispielsweise durch Löten, Schweißen oder Kleben verbunden ist. Wenn der Halteflansch als separates Bauteil gefertigt wird, ist die spanlose Herstellung der Hülse noch einfacher möglich.

Nach einem anderen zusätzlichen Merkmal der Erfindung ist gemäß Anspruch 8 vorgesehen, daß bei einer O-Anordnung der Rillenkugellager zwischen einer Welle und einer Aufnahmebohrung eine zweite spanlos geformte Hülse angeordnet ist, die an beiden Enden je einen radial nach außen weisenden, die Stimfläche der Innenringe überdeckenden Vorsprung besitzt. Die zweite Hülse dient dazu, die beiden Innenringe zusammenzuhalten. Der Vorteil liegt hierbei darin, daß der Kunde das Lager nicht erst bei der Montage vorspannen muß, sondern dies bereits im vorgespannten Zustand erhält.

Schließlich geht aus Anspruch 9 hervor, daß die Rillenkugellager auf einer Welle über eine geschlitzte mit einem Bund versehene Buchse axial gehalten sind, auf die ein Ring aufgeschoben ist. Der aufgeschobene Ring verringert den Durchmesser der geschlitzten Buchse, d. h. er klemmt diese radial fest, so daß ein sicherer Halt der Rillenkugellager gegeben ist. Ein auf der Welle aufgeschnittenes Gewinde für eine Präzisionsmutter wird somit nicht mehr benötigt.

Die Erfindung wird an nachstehenden Ausführungsbeispielen näher erläutert.

### Kurze Beschreibung der Zeichnungen

Es zeigen:
- Figuren 1, 2 und 3: einen Längsschnitt durch eine erfindungsgemäße Lageranordnung,
- Figuren 4 und 5: eine Draufsicht bzw. einen Schnitt durch eine geschlitzte Buchse und
- Figur 6: einen Längsschnitt durch einen Ring.

### Ausführliche Beschreibung der Zeichnungen

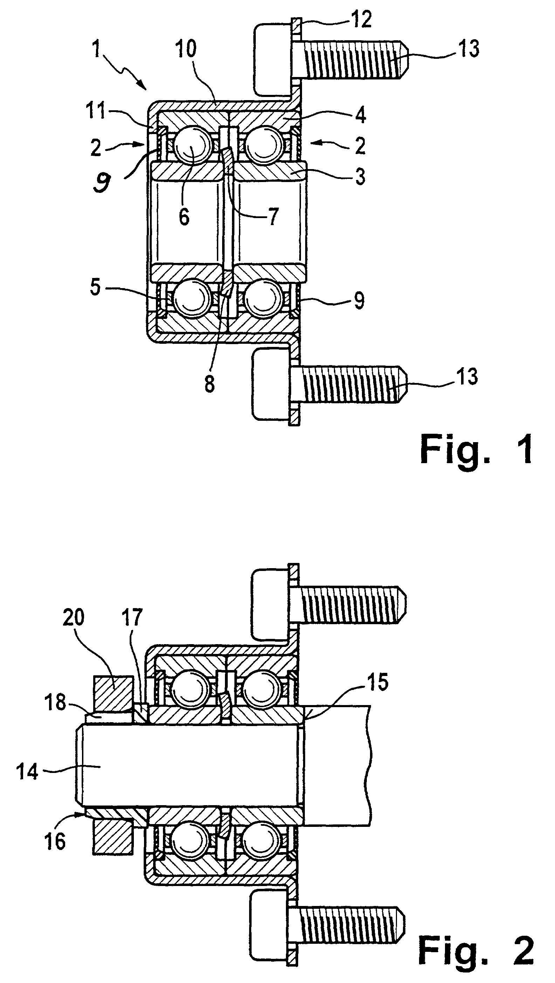

Die in den Figuren 1 und 2 gezeigte und mit 1 bezeichnete Lageranordnung besteht aus zwei nebeneinander angeordneten Rillenkugellagern 2 in X-Anordnung, d. h. die beiden Lagerinnenringe 3 sind um eine Spaltbreite auseinandergerückt, die der axialen Dicke der zwischen den Innenringen 3 angeordneten Paßscheibe 7 entspricht. Diese Paßscheibe 7 weist eine in axialer Richtung abgewinkelte Sicke 8 auf, so daß ein durch die Schwerkraft bedingtes Herunterrutschen in die Wellenaufnahmebohrung verhindert ist. Die zugehörigen Lageraußenringe 4 liegen mit ihren Schultern unmittelbar aneinander und sind an ihrer Außenmantelfläche konzentrisch von einer spanlos geformten ersten Hülse 10 aufgenommen, die an einem Ende einen radial nach innen gerichteten Vorsprung 11 aufweist, der wiederum die Stirnfläche des linksseitig angeordneten Lageraußenringes 4 des Rillenkugellagers 2 umfaßt. Am rechtsseitigen Ende ist die Hülse 10 mit einem Flansch 12 versehen, der an einer planen Fläche anliegt und mit Befestigungsschrauben 13 die gesamte Lageranordnung 1 fixiert. Zwischen den Lagerinnenringen 3 und den Lageraußenringen 4 der Rillenkugellager 2 wälzen auf zugehörigen nicht bezeichneten Laufbahnen in einem Käfig 5 geführte Lagerkugeln 6 ab. Die Lageranordnung 1 ist nach außen durch zwei Dichtungen 9 abgedichtet, so daß im Bereich der Laufbahnen befindliches Schmiermittel nicht nach außen dringen und von außen kein Schmutz in das Innere der Lageranordnung 1 gelangen kann. Bei der Montage der Lageranordnung 1 werden wahllos zwei Rillenkugellager 2 herausgegriffen und anschließend wird deren axialer Versatz ausgemessen und nach der vorgenommenen Messung die jeweilige Paßscheibe 7 mit der entsprechenden axialen Ausdehnung ausgewählt. Auf diese Weise ist nach dem Verbund mit der ersten Hülse 10 eine fertige Lagereinheit 1 gebildet, die bereits vorgespannt ist und während des Transportes zum Kunden nicht auseinander fallen kann. Dieser braucht diese Lagerbaueinheit 1 nur noch zu montieren, d. h. eine Einstellung der Vorspannung durch den Kunden selbst kann entfallen.

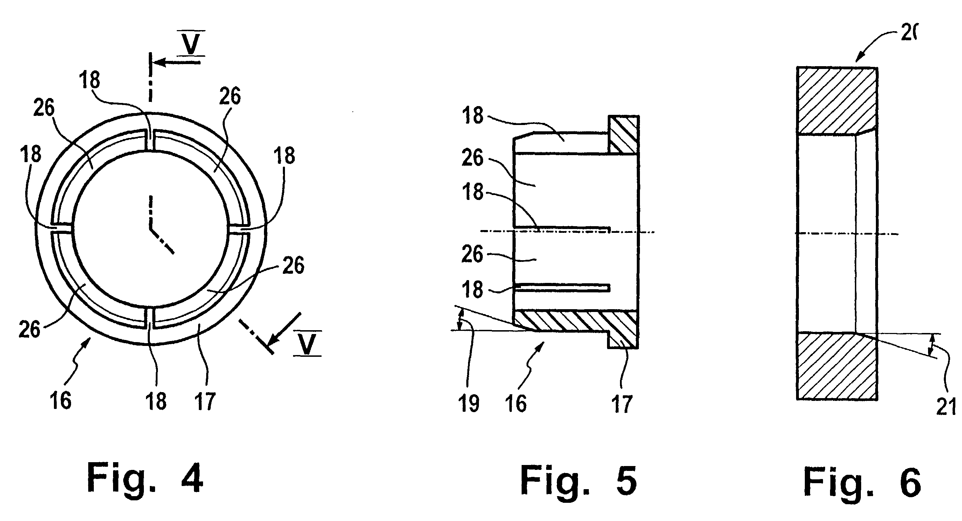

Wie die Figuren 2, 4, 5 und 6 zeigen, ist die Lageranordnung 1 mit Hilfe einer Buchse 16 und eines Ringes 20 auf einer Welle 14 befestigt. Dies erfolgt derart, daß zunächst die komplette Lageranordnung 1 auf die Welle 14 aufgeschoben wird, bis der Innenring 3 des rechtsseitigen Rillenkugellagers 2 an einer Schulter 15 der Welle 14 anliegt. Dann wird die Buchse 16 ebenfalls auf die Welle 14 aufgeschoben, bis sie mit ihrem Bund 17 an der Stirnseite des Innenringes 3 des linksseitig angeordneten Rillenkugellagers 2 anliegt. Danach wird ein Ring 20 auf die mit Schlitzen 18 versehene Buchse 16 aufgeschoben, so daß die durch die Schlitze 18 voneinander getrennten Segmente 26 in radialer Richtung fest auf die Mantelfläche der Welle 14 aufgepreßt werden. Sowohl die Buchse 16 als auch der Ring 20 weisen eine Abflachung 19 bzw. 21 auf, die die Fixierung der Lageranordnung 1 auf der Welle 14 erleichtern, da das Auffädeln des Ringes 20 auf die Buchse 16 aufgrund veränderter Durchmesser erleichtert ist.

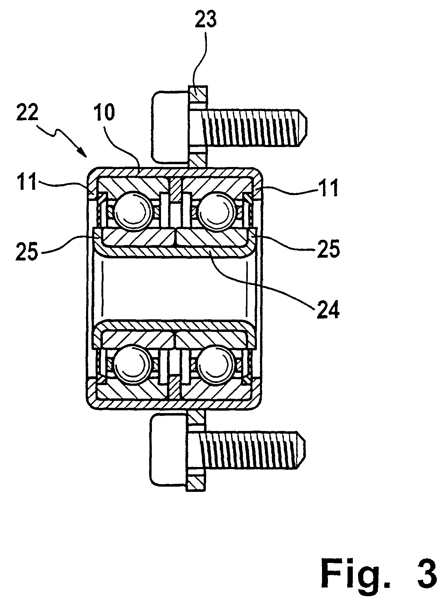

In Figur 3 ist eine Lageranordnung 22 in O-Anordnung dargestellt, d. h. die beiden Lageraußenringe 4 der nebeneinander angeordneten Rillenkugellager 2 sind um eine Spaltbreite auseinandergerückt, die wiederum der axialen Dicke der zugehörigen Paßscheibe 7 entspricht. Die beiden Rillenkugellager 2 sind wiederum an ihrer äußeren Mantelfläche von einer spanlos gezogenen ersten Hülse 10 aufgenommen, die an beiden Enden je einen radial nach innen gerichteten Vorsprung 11 aufweist. Im Unterschied zu den in Figuren 1 und 2 dargestellten Lager ist die Hülse 10 jedoch mit einem separaten Flansch 23 ausgestattet, der als separates Bauteil gefertigt und mit der ersten Hülse 10 unlösbar, beispielsweise durch Schweißen, verbunden ist. Um dem Lagerkunden diese Lageranordnung 22 auch in vorgespanntem Zustand liefern zu können, sind die beiden Lagerinnenringe 3 der Rillenkugellager 2 zusätzlich an ihrer inneren Mantelfläche von einer zweiten Hülse 24 aufgenommen, die an ihren Enden je einen radial nach außen gerichteten Vorsprung 25 besitzt, welche die Stirnflächen der beiden Lagerinnenringe 3 überdecken.

### Bezugszeichen

- 1: Lageranordnung
- 2: Rillenkugellager
- 3: Innenring
- 4: Außenring
- 5: Käfig
- 6: Lagerkugel
- 7: Paßscheibe
- 8: Sicke
- 9: Dichtung
- 10: erste Hülse
- 11: Vorsprung
- 12: Flansch
- 13: Befestigungsschraube
- 14: Welle
- 15: Schulter
- 16: Buchse
- 17: Bund
- 18: Schlitz
- 19: Abflachung
- 20: Ring
- 21: Abflachung
- 22: Lageranordnung
- 23: Flansch
- 24: zweite Hülse
- 25: Vorsprung
- 26: Segment

## Patentansprüche

1. Lageranordnung (1; 22) für einen Gewindetrieb, insbesondere für die Lagerung eines Wälzschraubtriebes in der Feinwerktechnik, bestehend aus zwei nebeneinander angeordneten Wälzlagern, die mit ihrer Mantelfläche von einem Halteelement (10) aufgenommen sind, wobei das Halteelement über einen Flansch (12; 23) an einem Gehäuse befestigt ist und Mittel zur Erzeugung einer Lagervorspannung vorhanden sind, **dadurch gekennzeichnet, daß** die Wälzlager Rillenkugellager (2) sind, die -wie an sich bekannt- zur Einstellung der gewünschten Vorspannung einander zusortiert sind und daß das Halteelement eine erste spanlos geformte Hülse (10) ist, die an einem Ende einen radial nach innen weisenden, die Stirnfläche des Rillenkugellagers (2) überdeckenden Vorsprung (11 ) und den Flansch (12) aufweist, der radial nach außen gerichtet ist.

2. Lageranordnung (1; 22) nach Anspruch 1, **dadurch gekennzeichnet, daß** zwischen den Innen- (3) oder den Außenringen (4) der Rillenkugellager (2) eine Paßscheibe (7) angeordnet ist.

3. Lageranordnung (1 ) nach Anspruch 2, **dadurch gekennzeichnet, daß** die Paßfeder (7) mit einer in axialer Richtung abgewinkelten Sicke (8) versehen ist.

4. Lageranordnung (1; 22) nach Anspruch 1, **dadurch gekennzeichnet, daß** die Rillenkugellager (2) in X- oder in O-Anordnung zueinander angestellt sind.

5. Lageranordnung (1; 22) nach Anspruch 1, **dadurch gekennzeichnet, daß** die Rillenkugellager (2) zumindest an ihren voneinander abgewandten Stirnseiten eine Dichtung (9) aufweisen.

6. Lageranordnung (1) nach Anspruch 1, **dadurch gekennzeichnet, daß** der Flansch (12) einstückig mit der Hülse (10) verbunden ist und sich an einem Ende der Hülse (10) befindet.

7. Lageranordnung (22) nach Anspruch 1, **dadurch gekennzeichnet, daß** der Flansch (23) als separates Bauteil gefertigt und mit der ersten Hülse (10) unlösbar verbunden ist.

8. Lageranordnung (22) nach Anspruch 1, **dadurch gekennzeichnet, daß** bei einer O-Anordnung der Rillenkugellager (2) zwischen einer Welle (14) und einer Aufnahmebohrung eine zweite spanlos geformte Hülse (24) angeordnet ist, die an beiden Enden je einen radial nach außen weisenden, die Stirnfläche der Innenringe (3) überdeckenden Vorsprung (25) besitzt.

9. Lageranordnung (1; 22) nach Anspruch 1, **dadurch gekennzeichnet, daß** die Rillenkugellager (2) auf der Welle (14) über eine geschlitzte, mit einem Bund (17) versehene Buchse (16) axial gehalten sind, auf die ein Ring (20) aufgeschoben ist.

## Claims

1. Bearing arrangement (1; 22) for a screw drive, in particular for the mounting of a rolling screw drive in precision mechanics, consisting of two rolling bearings which are arranged next to one another and are received with their outer surface area by the holding element (10), the holding element being fastened to a housing via a flange (12; 23), and means for generating a bearing prestress being present, **characterized in that** the rolling bearings are grooved ball bearings (2) which, as is known per se, are selected in relation to one another so as to set the desired prestress, and **in that** the holding element is a first sleeve (10), formed in a non-cutting manner, which at one end has a radially inward-pointing projection (11), covering the end face of the grooved ball bearing (2), and the flange (12) which is directed radially outwards.

2. Bearing arrangement (1; 22) according to Claim 1, **characterized in that** an adjusting washer (7) is arranged between the inner (3) and the outer (4) rings of the grooved ball bearings (2).

3. Bearing arrangement (1) according to Claim 2, **characterized in that** the adjusting washer (7) is provided with a bead (8) angled in the axial direction.

4. Bearing arrangement (1; 22) according to Claim 1, **characterized in that** the grooved ball bearings (2) are set in an X- or an O-arrangement in relation to one another.

5. Bearing arrangement (1; 22) according to Claim 1, **characterized in that** the grooved ball bearings (2) have a seal (9) at least on their end faces facing away from one another.

6. Bearing arrangement (1) according to Claim 1, **characterized in that** the flange (12) is connected in one piece to the sleeve (10) and is located at one end of the sleeve (10).

7. Bearing arrangement (22) according to Claim 1, **characterized in that** the flange (23) is manufactured as a separate component and is connected unreleasably on the first sleeve (10).

8. Bearing arrangement (22) according to Claim 1, **characterized in that**, in the case of an O-arrangement of the grooved ball bearings (2), a second sleeve (24), formed in a non-cutting manner, is arranged between a shaft (14) and a receiving bore and possess at each of the two ends a radially outward-pointing projection (25) covering the end face of the inner rings (3).

9. Bearing arrangement (1; 22) according to Claim 1, **characterized in that** the grooved ball bearings (2) are held axially on the shaft (14) via a slotted bush (16) which is provided with a collar (17) and onto which a ring (20) is pushed.

## Revendications

1. Dispositif de palier (1 ; 22) pour un cric à vis, en particulier pour le palier d'un cric à vis à roulement dans la mécanique de précision, composé de deux roulements disposés côte à côte et logés par leur surface d'enveloppe dans un élément support (10), l'élément support étant fixé sur un boîtier à l'aide d'une bride (12 ; 23) et des moyens pour la création d'une précontrainte du palier étant disponibles,
**caractérisé en ce que**
les roulements sont des roulements rainurés à billes (2) appariés - comme cela est connu en soi - pour le réglage de la précontrainte désirée et **en ce que** l'élément support est une première douille (10) formée sans enlèvement de copeaux qui présente à une extrémité une saillie (11) orientée dans le sens radial vers l'intérieur, recouvrant la face du roulement rainuré à billes (2) et présente la bride (12), qui est orientée dans le sens radial vers l'extérieur.

2. Dispositif de palier (1 ; 22) selon la revendication 1, **caractérisé en ce qu'**une rondelle d'ajustage (7) est disposée entre les bagues intérieures (3) ou les bagues extérieures (4) des roulements rainurés à billes (2).

3. Dispositif de palier (1) selon la revendication 2, **caractérisé en ce que** le ressort d'ajustage (7) est muni d'une moulure (8) pliée dans la direction axiale.

4. Dispositif de palier (1 ; 22) selon la revendication 1, **caractérisé en ce que** les roulements rainurés à billes (2) sont disposés en O ou en X l'un par rapport à l'autre.

5. Dispositif de palier (1 ; 22) selon la revendication 1, **caractérisé en ce que** les roulements rainurés à billes (2) présentent un joint (9) au moins sur leurs faces éloignées l'une de l'autre.

6. Dispositif de palier (1) selon la revendication 1, **caractérisé en ce que** la bride (12) est reliée d'un seul tenant avec la douille (10) et qu'elle se trouve à une extrémité de la douille (10).

7. Dispositif de palier (22) selon la revendication 1, **caractérisé en ce que** la bride (23) est réalisée comme une pièce à part reliée de manière indémontable avec la première douille (10).

8. Dispositif de palier (22) selon la revendication 1, **caractérisé en ce que**, dans le cas d'une disposition en O des roulements rainurés à billes (2), une seconde douille (24) formée sans enlèvement de copeaux, présentant à chacune de ses deux extrémités une saillie (25) orientée dans le sens radial vers l'extérieur et recouvrant la face des bagues intérieures (3), est disposée entre un arbre (14) et un alésage de positionnement.

9. Dispositif de palier (1 ; 22) selon la revendication 1, **caractérisé en ce que** les roulements rainurés à billes (2) sont maintenus dans la direction axiale sur l'arbre (14) par l'intermédiaire d'une douille fendue (16) munie d'un épaulement (17), sur laquelle est enfilée une bague (20).
